## Europäisches Patentamt
## European Patent Office
## Office européen des brevets

(11) Veröffentlichungsnummer: **0 363 736 B1**

# (12) EUROPÄISCHE PATENTSCHRIFT

(45) Veröffentlichungstag der Patentschrift:
18.12.91 Patentblatt 91/51

(51) Int. Cl.⁵: **C09K 11/85**

(21) Anmeldenummer: 89117898.0

(22) Anmeldetag: 27.09.89

(54) **Verfahren zum Herstellen eines Röntgenspeicherleuchtstoffes.**

(30) Priorität: 10.10.88 DE 3834414

(43) Veröffentlichungstag der Anmeldung:
18.04.90 Patentblatt 90/16

(45) Bekanntmachung des Hinweises auf die
Patenterteilung:
18.12.91 Patentblatt 91/51

(84) Benannte Vertragsstaaten:
BE DE FR GB IT

(56) Entgegenhaltungen:
EP-A- 0 295 522
FR-A- 2 430 969

(73) Patentinhaber: SIEMENS
AKTIENGESELLSCHAFT
Wittelsbacherplatz 2
W-8000 München 2 (DE)

(72) Erfinder: Huber, Claus, Dipl.-Phys.
Klüberstrasse 27
W-1000 Berlin 46 (DE)
Erfinder: Schwarzmichel, Klaus, Dr.
Tilmann-Riemenschneider-Strasse 46
W-8552 Höchstadt (DE)
Erfinder: von Seggern, Heinz, Dr.
Hallerstrasse 2
W-8501 Eckental (DE)
Erfinder: Winnacker, Albrecht, Prof.-Dr.
Puchtasstrasse 6
W-8520 Erlangen (DE)

## Beschreibung

Die Erfindung bezieht sich auf ein Verfahren zum Herstellen eines Röntgenspeicherleuchtstoffes mit photostimulierter Lumineszenz, insbesondere zum Herstellen · von Röntgenbildern durch Computer-Radiographie, bei dem eine Verbindung von Barium mit Fluor und Brom, die einen Dotierungsstoff enthält, gesintert wird.

Bei der digitalen Computer-Radiographie wird bekanntlich das Bild einer Röntgendurchstrahlung auf einer sogenannten Speicherplatte gespeichert und später von einem Bildleser in digitale elektrische Signale umgewandelt und auf einem Bildschirm sichtbar gemacht. In der Speicherplatte werden die Röntgenstrahlen umgewandelt in elektrische Ladungen. Zu diesem Zweck enthält sie einen Speicherleuchtstoff, der auf einen organischen Träger, im allgemeinen eine Folie, aufgebracht ist. Der Bildleser wandelt das flächenhafte Muster verschiedener Röntgenintensitäten um in entsprechende elektrische Signale, die über einen Analog-Digital-Wandler einem Bildaufbaurechner zugeführt werden. Nach erneuter Umwandlung in analoge Signale kann das Bild dem Bildschirm zugeführt werden.

Angeregt durch energiereiche Lesestrahlen, insbesondere einen roten Laser, wird die Speicherplatte abgetastet und die photostimulierte Lumineszenz punktweise nacheinander jeweils mit Hilfe eines Lichtleiters einem gemeinsamen Photomultiplier und einem Verstärker zugeführt. Der Laserstrahl wird mit Hilfe einer Optik auf der Speicherplatte fokussiert und mit einem Drehspiegel über die Zeile abgelenkt. Die Speicherplatte wird stufenweise relativ zum Fächer des Laserstrahls verschoben, so daß das gesamte Bild zeilenweise vom Laserstrahl abgetastet wird (Radiology, Bd. 148, Sept. 1983, Seiten 833 bis 838).

Die Speicherplatte besteht im allgemeinen aus einer Trägerfolie, die mit einer Speicherleuchtschicht versehen ist. Diese Speicherleuchtschicht enthält ein Speichermaterial mit photostimulierter Lumineszenz, das in einem Binder eingelagert ist. Einen guten Wirkungsgrad einer derartigen Speicheranordnung erhält man, wenn ein wesentlicher Teil der Röntgenquanten vom Speicherleuchtstoff absorbiert wird.

Eine kritische Größe bei der Computer-Radiographie mit photostimulierter Lumineszenz eines Speichermaterials ist die Schnelligkeit der Bildauslesung, die wichtig ist für die praktische Anwendung. Es gibt auch Anwendungen, beispielsweise bei der Verfolgung des Eindringens eines Kontrastmittels in ein Gefäßsystem, bei dem die Darstellung von Bildern im Sekundentakt erwünscht ist. Die Schnelligkeit der Bildauslesung ist begrenzt durch die physikalischen Eigenschaften des Speichermaterials. Die Schnelligkeit der Bildauslesung wird wesentlich bestimmt durch die Zeit, mit der die photostimulierte Lumineszenz nach der Anregung durch den auslesenden Laser wieder abgeklungen ist. Erst dann darf der Laser zum nächsten Bildpunkt fortschreiten, da sonst der rasternde Laser eine Leuchtspur hinterläßt. Aus Gründen des Bildkontrastes und der räumlichen Auflösung ist es zweckmäßig, den nächsten Bildpunkt beim Raster mit dem Laser erst zu erreichen, wenn die Fluoreszenz des vorangehenden Bildpunktes auf etwa 5% abgeklungen ist. Diese Zeit beträgt bei dem bekannten Speicherleuchtstoff aus mit Europium dotiertem Barium-Fluor-Bromid BaFBr : Eu etwa $\tau$ = 2,2 µs. Die Auslesezeit T für ein Röntgenbild aus 2000 × 2000 = 4000000 Bildpunkten beträgt dann beispielsweise

$$T = 2,2 \times 10^{-6} \times 4 \times 10^{6} \approx 9 \text{ s.}$$

Bei einem ferner bekannten Speichermaterial mit Europium oder mit Samarium dotiertem Strontiumsulfid SrS : Eu, Sm beträgt die Auslesezeit T = 2,5 s. Bei einem weiteren bekannten Speichermaterial aus mit Tellur dotiertem Rubidiumbromid RbBr : Tl beträgt die Auslesezeit T = 4,5 s. Diese bekannten Speichermaterialien haben zwar eine verhältnismäßig kurze Auslesezeit. Es wird jedoch wegen ihrer kleineren chemischen Ordnungszahl der beteiligten Elemente die Röntgenstrahlung schwächer absorbiert und sie zeigen zusätzlich eine kleinere Photostimulierbarkeit, was eine entsprechende Erhöhung der Röntgendosis für den Patienten zur Folge hat. Außerdem sind die genannten Auslesezeiten immer noch unbefriedigend.

Eine bekannte Anordnung zum Herstellen von Röntgenbildern durch Computer-Radiographie enthält eine Aufnahmeeinrichtung mit einer Speicherplatte und eine Wiedergabeeinrichtung mit einem Bildleser zur Abtastung der photostimulierten Lumineszenz der Speicherplatte mit einem Laserstrahl. Das Speichermaterial mit photostimulierter Lumineszenz enthält Barium Ba, Fluor F und Brom Br und ist mit Cer Ce dotiert. Es kann außerdem noch eines der Elemente Magnesium Mg, Calcium Ca, Strontium Sr, Zink Zn oder Cadmium Cd enthalten. Der Gehalt an Cer kann bis zu 20% betragen (US-Patent 4485302).

Die Erfindung beruht nun auf der Erkenntnis, daß bei der Verwendung von mit Cer dotierten Speicherleuchtstoffen die Auslesezeit des Röntgenbildes durch das Nachleuchten (tailing) des Speicherleuchtstoffes begrenzt ist und daß diese Speicherleuchtstoffe außerdem eine verhältnismäßig geringe Stimulierbarkeit aufweisen.

Diese bei der Verwendung als Speichermaterial für die Computer-Radiographie ungünstigen Eigenschaften werden nach der Erfindung beseitigt durch das Herstellungsverfahren gemäß dem Anspruch 1. Mit diesem Röntgenspeicherleuchtstoff wird die Auslesezeit der Röntgenbilder bei der Computer-Radiographie wesentlich, nämlich etwa um eine Größenordnung, verkleinert. Mit diesem Speichermaterial kann beispielsweise ein Röntgenbild aus 4000000 Bildpunkten in etwa 1 s ausgelesen werden. Diese schnelle Auslesbarkeit wird erreicht ohne wesentlichen Verlust an Helligkeit des Leuchtstoffes, die eine für die Strahlungsdosis des Patienten maßgebliche Größe darstellt.

Weitere besonders vorteilhafte Verfahrensmerkmale ergeben sich aus den Unteransprüchen.

Das Pulvergemisch gemäß der Erfindung kann beispielsweise aus Bariumfluorid $BaF_2$ und einem Zusatz von Bariumbromid $BaBr_2$ so wie dem Dotierungsstoff bestehen. Durch das Sintern entsteht ein dotiertes stabiles, unlösliches Bariumfluorbromid BaFBr, das überschüssiges, lösliches Bariumbromid $BaBr_2$ enthält, das anschließend ausgewaschen wird. Es kann ferner eine Mischung von Bariumfluorid mit einem Zusatz von Bariumbromid und Bariumjodid $BaF_2 + (BaBr_2)_{1-x} + (BaJ_2)_x$ und dem Dotierungsstoff als Ausgangsmaterial verwendet werden, aus der durch das Sintern eine stabile Verbindung von Barium, Fluor, Brom und Jod $BaFBr_{1-x}J_x$ entsteht, aus der überschüssiges Bariumbromid $BaBr_2$ und Bariumjodid $BaJ_2$ ausgewaschen wird. Ferner kann auch eine Mischung aus Bariumfluorid mit einem Zusatz von Bariumchlorid und Bariumbromid $BaF_2 + (BaCl_2)_x + (BaBr_2)_{1-x}$ und dem Dotierungsstoff verwendet werden. Der Zusatz von Bariumhalogenid erfolgt in einem Molverhältnis $BaF_2/BaBr_2$ von etwa 0,1 bis 2, vorzugsweise 0,2 bis 1,3. Außerdem ist eine Mischung des Bariumfluorids mit einem Zusatz von Bariumchlorid und Bariumjodid $BaF_2 + (BaCl_2)_{1-x} + (BaJ_2)_x$ und dem Dotierungsstoff als Ausgangsmaterial geeignet, aus der überschüssiges Bariumchlorid $BaCl_2$ und Bariumjodid ausgewaschen wird. In diesem Falle erfolgt die Mischung in einem Molverhältnis $BaF_2/BaCl_2$ in einem Molverhältnis von etwa 0,1 bis 2, vorzugsweise 0,2 bis 1,3. Der Dotierungsstoff besteht aus Verbindungen von Europium Eu oder Cer Ce, vorzugsweise Europium-Halogeniden, beispielsweise Europiumchlorid $EuCl_3$ oder Europiumbromid $EuBr_3$ oder Europiumjodid $EuJ_3$, sowie Cer-Halogeniden, beispielsweise Cerchlorid $CeCl_3$ oder Cerbromid $CeBr_3$ oder Cerjodid $CeJ_3$. Der Dotierungsstoff wird mit einem Gewichtsanteil > 0 bis etwa 6%, vorzugsweise bis etwa 3%, zugesetzt. Das Sintern des Pulvergemisches erfolgt bei einer Temperatur von etwa 500 bis 1150 °C, vorzugsweise etwa 700 bis 1100°C, während einer Zeit von wenigstens 0,5 h, vorzugsweise wenigstens 2 h. Der Reduktionsvorgang erfolgt in einer reduzierenden Gasatmosphäre, vorzugsweise in einem Formiergas, das im allgemeinen ein Gemisch aus Stickstoff und Wasserstoff enthält, oder auch in einer Wasserstoffatmosphäre in einem Temperaturbereich von etwa 200 bis 1000°C, vorzugsweise etwa 400 bis 800°C, während einer Zeit von wenigstens 0,5 h, vorzugsweise wenigstens 2 h.

In einer besonders vorteilhaften weiteren Ausgestaltung des Verfahrens kann die Effizienz durch Zugabe von Erdalkalidotierungen und Flußmitteln (Alkalihalogeniden wie beispielsweise Natriumfluorid NaF oder Natriumhexafluorosilikat $Na_2SiF_6$ sowie Bortrioxid $B_2O_3$) bei der Synthese noch weiter gesteigert werden.

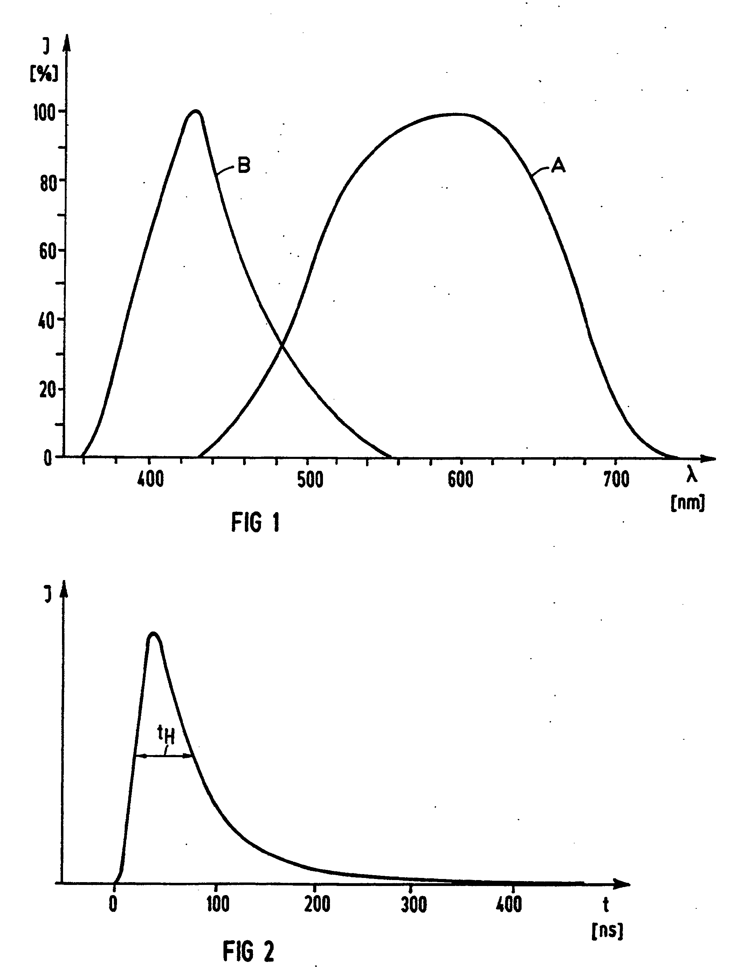

Zur weiteren Erläuterung der Erfindung wird auf die Zeichnung Bezug genommen, in der die Eigenschaften des Speichermaterials gemäß der Erfindung in zwei Diagrammen schematisch veranschaulicht sind. Figur 1 zeigt die Intensität des Fluoreszenzlichtes als Funktion der Wellenlänge des stimulierenden Lichtes sowie das Emissionsspektrum bei Photostimulation nach einer Röntgenbestrahlung. Das Nachleuchten der photostimulierten Fluoreszenz nach einer Anregung ist Figur 3 zu entnehmen.

Im Diagramm der Figur 1 ist die relative Intensität I des Fluoreszenzlichtes in Prozent als Funktion der Wellenlänge des stimulierenden Lichtes in nm für ein Speichermaterial gemäß der Erfindung aufgetragen, das beispielsweise aus einer Mischung von Bariumfluorid $BaF_2$ und Bariumbromid $BaBr_2$ mit Cerbromid $CeBr_3$ als Dotierungsstoff entstanden ist. Aus dem Verlauf des Spektrums A geht hervor, daß die verwertbare Intensität im Bereich von etwa 450 bis 700 nm liegt mit einem Maximum der Intensität zwischen etwa 550 und 650 nm. Zur Auslesung kann somit ein üblicher Laser, beispielsweise ein Helium-Neonlaser mit einer Wellenlänge $\lambda = 633$ nm oder ein Kryptonlaser mit einer Wellenlänge von 647 nm, verwendet werden. Aus dem Emissionsspektrum B bei Photostimulation nach einer Röntgenbestrahlung kann man entnehmen, daß die photostimulierte Lumineszenz in einem Bereich der Wellenlänge $\lambda$ von etwa 380 bis 510 nm liegt und sie ihr Maximum im Bereich von etwa 400 bis 470 nm hat. Die photostimulierte Lumineszenz dieses Speichermaterials kann somit von einem Detektor erfaßt werden, dessen Empfindlichkeitsbereich genügend weit, nämlich etwa 200 nm unterhalb der Wellenlänge des anregenden Lasers liegt.

Dem Diagramm gemäß Figur 2, in dem die Intensität I über der Zeit t in ns aufgetragen ist, kann man entnehmen, daß die photostimulierte Emission eines angeregten Bildpunktes mit einer Halbwertszeit $t_H$ von etwa 66 ns abklingt. Wird von diesem Betrag noch die Pulsdauer einer bei der Messung verwendeten handelsüblichen ns-Blitzlampe mit etwa 11 ns abgezogen, so erhält man eine Halbwertszeit von nur 55 ns. Es tritt somit beim Speichermaterial gemäß der Erfindung nur ein geringes Nachleuchten des angeregten Bildpunktes auf. Die Amplitude der dargestellten Antwort auf eine Anregung durch eine ns-Blitzlampe ist abhängig von der Lichtintensität des anregenden Lichtes. Maßeinheiten für die Intensität I sind deshalb nicht angegeben.

## Patentansprüche

1. Verfahren zum Herstellen eines Röntgenspeicherleuchtstoffes mit photostimulierter Lumineszenz, insbesondere zum Herstellen von Röntgenbildern durch Computer-Radiographie, bei dem eine Mischung aus verschiedenen Verbindungen der Halogenide der Erdalkalien mit einem Dotierungsstoff gesintert wird, **gekennzeichnet** durch folgende Verfahrensschritte :

a) Bariumfluorid BaF$_2$ wird gemischt mit mindestens einem Bariumhalogenid und mit einer Verbindung von Europium Eu oder Cer Ce als Dotierungsstoff,

b) das Sintern erfolgt in einem Temperaturbereich von etwa 500 bis 1150°C während einer Zeit von mindestens 0,5 h,

c) anschließend wird ein überschüssiger Teil des Bariumhalogenids oder der Bariumhalogenide ausgewaschen,

d) das gesinterte Material wird in einer reduzierenden Gasatmosphäre in einem Temperaturbereich von 200 bis 1000°C während einer Zeit von wenigstens 0,5 h getempert.

2. Verfahren nach Anspruch 1, **gekennzeichnet** durch eine Mischung aus Bariumfluorid BaF$_2$ mit Bariumbromid BaBr$_2$ sowie dem Dotierungsstoff.

3. Verfahren nach Anspruch 1, **gekennzeichnet** durch eine Mischung aus Bariumfluorid BaF$_2$ mit Bariumbromid BaBr$_2$ und Bariumjodid BaJ$_2$ sowie dem Dotierungsstoff.

4. Verfahren nach Anspruch 1, **gekennzeichnet** durch eine Mischung aus Bariumfluorid BaF$_2$ mit Bariumchlorid BaCl$_2$ und Bariumbromid BaBr$_2$ sowie dem Dotierungsstoff.

5. Verfahren nach Anspruch 2, **dadurch gekennzeichnet**, daß die Mischung von BaF$_2$/BaBr$_2$ in einem Molverhältnis von 0,1 bis 2 erfolgt.

6. Verfahren nach Anspruch 5, **dadurch gekennzeichnet**, daß die Mischung in einem Molverhältnis von 0,2 bis 1,3 erfolgt.

7. Verfahren nach Anspruch 1, **gekennzeichnet** durch eine Mischung aus Bariumfluorid BaF$_2$ mit Bariumchlorid BaCl$_2$ und Bariumjodid BaJ$_2$ sowie dem Dotierungsstoff.

8. Verfahren nach Anspruch 7, **dadurch gekennzeichnet**, daß die Mischung von BaF$_2$/BaCl$_2$ in einem Molverhältnis von 0,1 bis 2, vorzugsweise 0,2 bis 1,3, erfolgt.

9. Verfahren nach einem der Ansprüche 1 bis 7, **gekennzeichnet** durch ein Europiumhalogenid als Dotierungsstoff.

10. Verfahren nach einem der Ansprüche 1 bis 7, **gekennzeichnet** durch ein Cerhalogenid als Dotierungsstoff.

11. Verfahren nach Anspruch 9 oder 10, **dadurch gekennzeichnet**, daß der Dotierungsstoff in einem Gewichtsanteil > 0 bis 3 Gew.-% zugesetzt wird.

12. Verfahren nach Anspruch 1, **dadurch gekennzeichnet**, daß das Sintern in einem Temperaturbereich von 700 bis 1100°C erfolgt.

13. Verfahren nach Anspruch 1, **dadurch gekennzeichnet**, daß das Sintern während einer Zeit von mindestens 2 h erfolgt.

14. Verfahren nach Anspruch 1, **gekennzeichnet** durch die Verwendung von Formiergas als reduzierende Gasatmosphäre.

15. Verfahren nach Anspruch 1, **dadurch gekennzeichnet**, daß die Temperung während eines Zeitraums von wenigstens 2 h erfolgt.

## Claims

1. Process for the production of an X-ray storage phosphor with photo-stimulated luminescence, in particular for producing X-ray images by computer-radiography, in which a mixture of different alkaline earth halide compounds with a dopant is sintered, characterised by the following process steps :

a) barium fluoride BaF$_2$ is mixed with at least one barium halide and with a compound of europium Eu or cerium Ce as a dopant,

b) sintering is carried out in a temperature range of from approximately 500 to 1150°C for a period of at least 0.5 hours,

c) then an excess amount of the barium halide or the barium halides is washed out,

d) the sintered material is tempered in a reducing gas atmosphere in a temperature range of from 200 to 1000°C for a period of at least 0.5 hours.

2. Process according to claim 1, characterised by a mixture of barium fluoride BaF$_2$ with barium bromide BaBr$_2$ and the dopant.

3. Process according to claim 1, characterised by a mixture of barium fluoride BaF$_2$ with barium bromide BaBr$_2$ and barium iodide BaI$_2$ and the dopant.

4. Process according to claim 1, characterised by a mixture of barium fluoride BaF$_2$ with barium chloride BaCl$_2$ and barium bromide BaBr$_2$ and the dopant.

5. Process according to claim 2, characterised in that the mixture of BaF$_2$/BaBr$_2$ is present in a mole ratio of 0.1 to 2.

6. Process according to claim 5, characterised in that the mixture is present in a mole ratio of from 0.2 to 1.3.

7. Process according to claim 1, characterised by a mixture of barium fluoride BaF$_2$ with barium chloride BaCl$_2$ and barium iodide BaI$_2$ and the dopant.

8. Process according to claim 7, characterised in that the mixture of BaF$_2$/BaCl$_2$ is present in a mole ratio of from 0.1 to 2, preferably 0.2 to 1.3.

9. Process according to one of claims 1 to 7, characterised by a europium halide as dopant.

10. Process according to one of claims 1 to 7, characterised by a cerium halide as dopant.

11. Process according to claim 9 or 10, characterised in that the dopant is added in a proportion of > 0 to 3% by weight.

12. Process according to claim 1, characterised in that sintering is carried out in a temperature range of from 700 to 1100°C.

13. Process according to claim 1, characterised in that sintering is carried out for a period of at least 2 hours.

14. Process according to claim 1, characterised by the use of forming gas a reducing gas atmosphere.

15. Process according to claim 1, characterised in that tempering is carried out for a period of at least 2 hours.

## Revendications

1. Procédé pour fabriquer un matériau luminescent pour l'enregistrement radiographique à luminescence photostimulée, notamment pour la réalisation d'images radiographiques au moyen de la radiographie assistée par ordinateur, et selon lequel on fait un mélange formé de différents composés des halogénures des métaux alcalino-terreux avec une substance dopante, caractérisé par les étapes opératoires suivantes :

a)    on mélange du fluorure de baryum $BaF_2$ à au moins un halogénure de baryum et à un composé d'europium Eu ou de cérium Ce en tant que substance dopante,

b)    on réalise le frittage dans une plage de températures comprises entre environ 500 et 1150°C pendant une durée d'au moins 0,5 h,

c)    on élimine ensuite par lavage une partie en excès du ou des halogénures de baryum,

d)    on soumet à un recuit le matériau fritté dans une atmosphère de gaz réducteur, et ce dans une plage de températures comprise entre 200 et 1000°C pendant une durée d'au moins 0,5 h.

2. Procédé suivant la revendication 1, caractérisé par un mélange de fluorure de baryum $BaF_2$ avec du bromure de baryum $BaBr_2$ ainsi que la substance dopante.

3. Procédé suivant la revendication 1, caractérisé par un mélange de fluorure de baryum $BaF_2$ avec du bromure de baryum $BaBr_2$ et du iodure de baryum $BaJ_2$ ainsi que la substance dopante.

4. Procédé suivant la revendication 1, caractérisé par un mélange de fluorure de baryum $BaF_2$ avec du chlorure de baryum $BaCl_2$ et du bromure de baryum $BaBr_2$ ainsi que la substance dopante.

5. Procédé suivant la revendication 2, caractérisé par le fait que le mélange de $BaF_2$/$BaBr_2$ est réalisé avec un rapport molaire compris entre 0,1 et 2.

6. Procédé suivant la revendication 5, caractérisé par le fait que le mélange est réalisé avec un rapport molaire compris entre 0,2 et 1,3.

7. Procédé suivant la revendication 1, caractérisé par un mélange de fluorure de baryum $BaF_2$ avec du chlorure de baryum $BaCl_2$ et du iodure de baryum $BaJ_2$ ainsi que la substance dopante.

8. Procédé suivant la revendication 7, caractérisé par le fait que le mélange de $BaF_2$/$BaCl_2$ est réalisé avec un rapport molaire compris entre 0,1 et 2 et de préférence entre 0,2 et 1,3.

9. Procédé suivant l'une des revendications 1 à 7, caractérisé par un halogénure d'europium en tant que substance dopante.

10. Procédé suivant l'une des revendications 1 à 7, caractérisé par l'utilisation d'un halogénure de cérium en tant que substance dopante.

11. Procédé suivant la revendication 9 ou 10, caractérisé par le fait qu'on ajoute la substance dopante en un pourcentage en poids > 0 à 3% en poids.

12. Procédé suivant la revendication 1, caractérisé par le fait que le frittage est réalisé dans une plage de températures de 700 à 1100°C.

13. Procédé suivant la revendication 1, caractérisé par le fait que le frittage est réalisé pendant une durée d'au moins 2 h.

14. Procédé suivant la revendication 1, caractérisé par l'utilisation d'un gaz de formage en tant qu'atmosphère de gaz réductrice.

15. Procédé suivant la revendication 1, caractérisé par le fait que le recuit est réalisé pendant un intervalle de temps d'au moins 2 h.

**FIG 1**

**FIG 2**